Europäisches Patentamt

European Patent Office

Office européen des brevets

(19)

(11) **EP 0 892 286 B1**

(12) **EUROPEAN PATENT SPECIFICATION**

(45) Date of publication and mention
of the grant of the patent:
**09.02.2000 Bulletin 2000/06**

(51) Int Cl.⁷: **G01V 8/10**

(21) Application number: **97112337.7**

(22) Date of filing: **18.07.1997**

(54) **Method of adaptive and combined thresholding for daytime aerocosmic remote detection of hot targets on the earth surface**

Verfahren zur adaptiven und kombinierten Schwellenwertverarbeitung für Fernerkennung über Tag von heissen Zielen am Erdboden

Procédé d'établissement adaptive et combinée de seuil pour détection diurnale aérocosmique à distance de cibles chaudes à la surface terrestre

(84) Designated Contracting States:
**CH DE ES FI FR GR IT LI PT SE**

(43) Date of publication of application:
**20.01.1999 Bulletin 1999/03**

(73) Proprietor: **Deutsches Zentrum für Luft- und Raumfahrt e.V.**
**53175 Bonn (DE)**

(72) Inventors:
• **Oertel, Dieter**
  **82256 Fürstenfeldbruck (DE)**
• **Lorenz, Eckehard**
  **12621 Berlin (DE)**
• **Jahn, Herbert**
  **12487 Berlin (DE)**
• **Zhukov, Boris**
  **141002 Mytischtchi (RU)**

(74) Representative:
**von Kirschbaum, Albrecht, Dipl.-Ing.**
**Patentanwalt, Bahnhofplatz 2**
**82110 Germering (DE)**

(56) References cited:
**US-A- 5 153 722**       **US-A- 5 602 543**
**US-A- 5 617 318**

**Description**

The present invention relates to a method of adaptive and combined thresholding for daytime aerocosmic remote detection of hot targets on the earth surface based on the utilisation of system corrected multispectral optoelectronic sensor system data.

High temperature events on the earth surface cause very often environmental disasters. Such high temperature events are forest and savannah fires, fires of open coal mines, volcanic activities and others (e.g. fires of oil wells, pipelines etc.). A very essential prerequisite for the determination of event parameters such as temperature, extent, and position is the reliable spaceborne or airborne remote detection of the high temperature events as "hot targets". Airborne remote detection of hot targets is mainly possible at local or regional scale. Spaceborne high temperature event disaster recognition systems may operate at global and regional scale. More relevant data and new data evaluation methods are needed which cannot be provided by the existing space- and airborne sensors as known from, eg, US-A-5 602 543.

The field of this invention are techniques for daytime remote detection of hot targets on earth surface based on system corrected multispectral data from spaceborne or airborne imaging optoelectronic sensor systems which are designed for the acquisition of co-registered radiometric image scene data in the Mid Infrared (MIR, e.g. 3 - 5 µm region), in the Thermal Infrared (TIR, e.g. 8 - 13 µm region) and in the Visible/Near Infrared (VNIR, e.g. 0.4 - 1.0 µm region). System corrected data are processed from raw data by the application of radiometric correction data files obtained during the laboratory on-ground calibration of the sensors and updated during in-flight checks. System corrected radiometric data are at-sensor pixel radiance values. In order to obtain from them at-surface pixel radiance values, an additional atmospheric correction is required as an interactive procedure.

Techniques for remote detection of hot targets based on satellite or airborne sensor data must be automated as much as possible to minimize time and personnel costs for interactive operations such as the atmospheric correction of the radiometric sensor data. This requires the development of a sequence of procedures which must be capable of using "direct and non-interactive inputs" of sensor data to distinguish reliably between real hot targets and other so called false alarm background sources.

The main problems for reliable daytime remote fire or hot target detection and analysis based on airborne or satellite optoelectronic sensor data are:

- due to limited ground resolution of the optoelectronic sensor the hot targets cover often only a small part of the observed ground pixel,
- strong temporal and spatial variability within hot targets,
- a big dynamic range of the sensor channels is required to avoid saturation,
- obscuration of hot spots by smoke,
- variable radiance emission of the background in the adjacency of hot targets,
- different types of false alarm candidate targets.

The main types of false alarms in the remote fires and other hot target detection procedures based on airborne and satellite sensor data are:

- industrial hot spots,
- clouds,
- sun glitter,
- higher albedo surfaces,
- extended warm surfaces (heated by the sun).

The Mid Infrared spectral region (MIR) is commonly recognized as the optimal spectral range for remote detection of fires and other hot targets on earth surface, since:

- the MIR is near to the spectral maximum of the hot target emission,
- both, reflected solar radiation and emission from background are low in the MIR.

A "hot target" signal can be generally thought of as a well expressed signal enhancement in the MIR channel relative to the background and, as a result, the maximal hot target/background contrast is achieved in the MIR.

On the other hand the target/background contrast is lower in the TIR due to a lower ratio between the hot target radiance and the emitted ambient background radiance.

In the Short Wave Infrared (SWIR, e.g. 1 - 2,5 µm region), where the hot target radiance is also high, a serious problem for daytime observations is given by sun light reflections.

Remote hot target detection techniques of the prior art are based on fixed threshold methods:

- thresholding of MIR radiant temperature $T_{MIR}$ to retrieve bright spots as potential hot targets from an image scene with image element (pixel) related radiance values,
- using the difference of the MIR and TIR radiant temperatures $T_{MIR}$ - $T_{TIR}$ as a relative but fixed threshold to filter out warm surface elements as one type of potential candidates for "hot target false alarms",
- thresholding of the TIR radiant temperature $T_{TIR}$ to filter out clouds as another type of false alarm candidates,
- using the radiant temperature difference threshold between two thermal channels (for additional cloud discrimination),
- using a fixed 9 % reflectance threshold in the visible channel at 0.5 µm to filter out particularly sub-resolution clouds.

The prior art shows that the fixed threshold approach seems appropriate and performs well only within specific areas of the earth surface since each of these fixed threshold algorithms was optimized for a particular region.

Thresholding techniques are the appropriate measures for remote hot target detection with false alarm rejection, however, the optimal MIR threshold values for the false alarm rejection should be different for various regions and seasons.

Fixed threshold values would either increase the number of false alarms in warmer areas or increase the number of missed hot targets in colder areas, or both.

The problem of the applicability of thresholds seems to be better resolved by the application of adaptive thresholding techniques for the MIR channel data, when the threshold level is adapted to the mean value of the ambient background radiance and to its variability.

The emission of the ambient background of a hot target is usually unknown and must be estimated as one precursor step when absolute thresholding is used in the MIR and/or TIR channel for hot target detection.

Furthermore a fixed thresholding requires the use of calibrated and atmospherically corrected sensor data and therefore, as the rule, an interactive processing.

Low VNIR reflection due to ash cover of fire area was used for confirmation of active fires. However, the fire separability in this spectral range is not reliable, especially in forests.

The fire obscuration by dry smoke is stronger in the VNIR-SWIR spectral range, weaker in the MIR, and may be small in the TIR due to a rather small smoke particles size of 0.1-0.5 µm.

A reliable recognition of hot targets is a fundamental prerequisite for a quantitative analysis using the bi-spectral techniques.

It is an object of the invention to provide an improved method of adaptive and combined thresholding for daytime remote detection of hot targets on earth surface which can overcome the aforementioned difficulty enabling the use of direct and non-interactive inputs of sensor data to distinguish reliably between real hot targets and other so called false alarm background sources.

The object of the present invention is obtained by a method of adaptive and combined thresholding as set out in the claims.

According to the invention there is provided a bright spot detection thresholding algorithm for the MIR and TIR channels.

The moving window algorithm for the bright spot detection in both the MIR and TIR channel data is applied to image boxes of, for instance, 15 x 15 pixels.

For each moving window box of the MIR and TIR images the median $g_{med}$ and the deviation

$$d = \frac{1}{N} \sum_{i=1}^{N} \left| g_i - g_{med} \right| \tag{1}$$

are calculated, where $N$ is the number of pixels in the box and $g_i$ are their radiance signals. A pixel is identified as a bright spot, if

$$g_i > g_{med} + \Delta g, \tag{2}$$

where the threshold $\Delta g$ over the median $g_{med}$ can be selected either fixed or adapted, for instance, to be proportional to the deviation $d$:

$$\Delta g = \alpha \cdot d, \tag{3}$$

with the free parameter $\alpha$ .

In order to reduce the influence of the hot target contribution on the deviation value obtained for each moving window, the following procedure is applied:

- calculation of the deviation $d^0$ using all pixels in the box,
- calculation of the background deviation $d$ using only the pixels of the box for which the difference of the current signal $g_i$ from the median value $g_{med}$ does not exceed $3d^0$.

A too low value of the threshold $\Delta g$ (or of the threshold parameter $\alpha$) leads to a large number of false alarms. On the other hand, using a too large value of $\Delta g$ (or $\alpha$) leads to rejection of pixels with a small hot target contribution.

According the invention there is provided a preliminary bright spot detection with an adaptive MIR threshold (Step S1). The detection of the bright spots is started by an adaptive MIR thresholding, rejecting the fire-free pixels with the MIR radiance below the threshold in accordance with equations (1), (2), and (3).

The next method step according to the invention is the rejection of false alarms by combined thresholding (Step S2). This procedure consists of several successive processing substeps performed for each bright spot as selected at the previous step of the co-registered multispectral scene providing fixed as well as adaptive thresholding operations with its radiometric data in the Thermal Infrared (TIR) channel in combination with a threshold operation using a ratio of the radiometric data in the MIR channel to the radiometric data in a Visible/Near Infrared (VNIR) channel.

After the preliminary detection of bright spots in the MIR for satellite data utilisation, first a fixed thresholding has to be performed in the TIR in substep SS2.1, requiring that the at-sensor radiance of all the bright spots in the TIR channel should exceed a threshold value $g^{TIR}_{thresh}$ corresponding, for instance, to a temperature of 250° K to eliminate cloud pixels.

This is a fixed threshold procedure. It may not be performed for airborne data, if there are no expectations to have clouds in the scene under evaluation.

An adaptive MIR/VNIR ratio threshold is applied to all remaining bright spots in the next substep SS2.2 procedure, where the typical threshold ratio value

$$thres_{MIR/VNIR} = 0{,}01 - 0{,}02$$

has to be selected depending on different criterias, such as, for instance, the spectral response function of the used VNIR channel and the sun height. All bright spots with a MIR/VNIR channel radiance ratio less than $thres_{MIR/VNIR}$ are filtered out as false alarms (a low MIR/VNIR value is obtained for pixels with a strong contribution of the reflected solar radiation, which is an important false alarm source).

The combined application of the adaptive MIR thresholding in accordance with equations (2) and (3) and of the $thres_{MIR/VNIR}$ allows to use a significant lower value for the adaptive MIR threshold $\alpha^{MIR}$ during the procedure of the preliminary detection of bright spots. This is a very important feature of the invention with respect to detection of smaller hot targets based on satellite data.

An adaptive TIR threshold is applied in substep SS2.3 to all remaining bright spots in a next moving window procedure, finishing the combined thresholding procedure.

The adaptive TIR thresholding allows to select among the MIR bright spots only those pixels, which have the TIR radiance value higher than for the background. A rather small adaptive TIR threshold $\Delta g^{TIR}$, corresponding to $\sim 1°$ K above the median value of the radiance temperature obtained from the TIR channel data, is used for this purpose in order not to limit additionally detectability of small hot targets.

This adaptive TIR thresholding should be the last at the stage of the mandatory false alarms rejection procedures according to the invention, since it requires more computations.

The procedure of adaptive and combined thresholding for daytime remote detection of hot targets according to the invention is the basis for the step OS3 in which the co-registered, calibrated and atmospherically corrected MIR- and TIR-channel data are used in the bi-spectral technique, known as a method of two-channel bright spot analysis in the sub-pixel domain. An application of this bi-spectral technique requires the reliable recognition of the hot target candidates for two reasons. First, the bi-spectral technique may interpret some types of false alarms as real hot targets. On the other hand, the invented procedure of adaptive and combined thresholding for daytime remote detection of hot targets requires less technical and numerical efforts than an exclusive application of the bi-spectral technique.

The optional application of the bi-spectral technique with target relative area check and target temperature thresholding (Step OS3) will be described subsequently. The aim of the bi-spectral technique is to retrieve the apparent target temperature $T_{HOT\ TARGET}$ and the apparent relative target area $q_{HOT\ TARGET}$ (the apparent proportion of the pixel occupied by the target).

The bi-spectral technique is applied in substep OSS3.1 to the radiometrically calibrated and atmospherically corrected MIR and TIR signals of the scene pixels, remaining after the false alarm rejection procedures (e.g. after the hot target detection steps as outlined in the previous sections describing the steps S1 and S2 of the given invention).

The relative target area $q_{HOT\ TARGET}$ is checked in substep OSS3.2 to be within the physically reasonable range of

$$0 \leq q_{HOT\ TARGET} \leq 1. \tag{4}$$

The targets not meeting condition (4) are rejected as false alarms.

The target temperature values $T_{HOT\ TARGET}$ obtained by the bi-spectral technique are now compared in a further possible thresholding substep OSS3.3 with selected "low" and "high" temperature boundaries of the hot target radiance temperature

$$T_{low} \leq T_{HOT\ TARGET} \leq T_{high}$$

for a possible additional subsequent false alarm rejection. For fire targets the boundaries can be, for example, selected as $T_{low}$ = 500° K, $T_{high}$ = 1500° K.

The optional target area check and apparent target temperature thresholding would allow to decrease the value of $\alpha$.

The present invention will be described in further detail with reference to an accompanying FIGURE showing a flow chart for the invented procedure of adaptive and combined thresholding for daytime remote detection of hot targets.

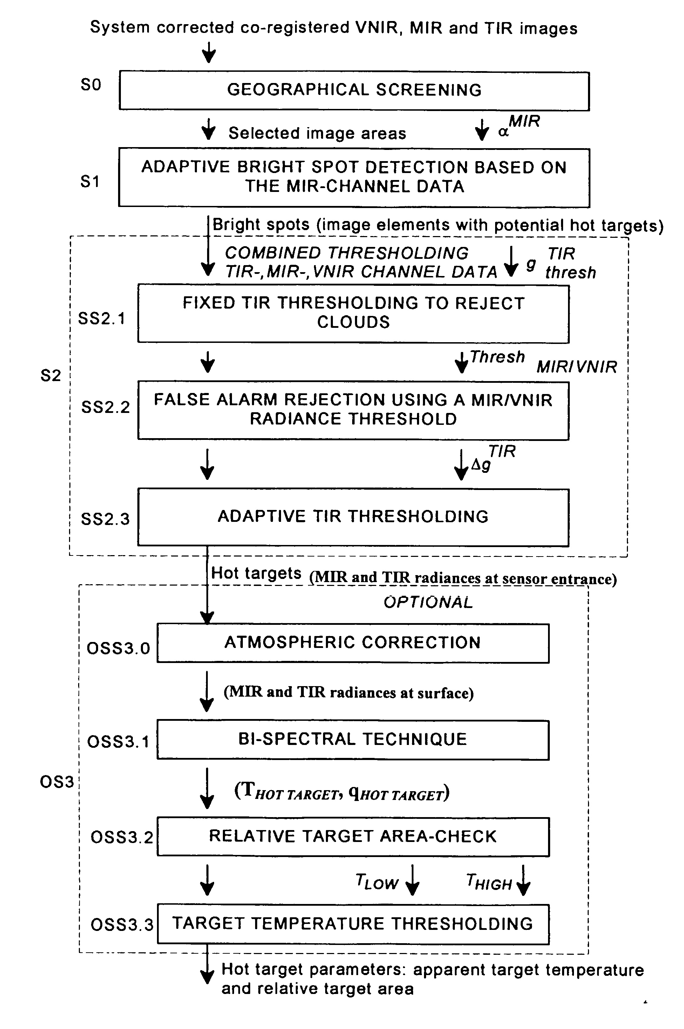

The FIGURE shows all aspects of the invention including the optional procedure with false alarm rejection based on the check of the relative target area $q_{HOT\ TARGET}$ and the thresholding of the target temperature $T_{HOT\ TARGET}$ obtained by using the bi-spectral technique.

The system corrected multispectral optoelectronic sensor data of the daytime scene have to pass the following processing steps:

- Step S0 (Geographical screening): This step excludes from processing the areas, where the hot targets can not be expected (e.g. large water bodies). It requires a data geo-referencing and is not a part of the method according this invention.

- Step S1 (Adaptive bright spot detection based on the Mid Infrared (MIR)-channel data): This preliminary step of the invention allows to select bright spots in the MIR images by the adaptive MIR thresholding. A rather large number of false alarms among the selected bright spots can be expected.

- Step S2 (Combined thresholding based on the Thermal Infrared (TIR)-, MIR- and Visible/Near infrared (VNIR)-channel data): This central step of the invention includes the following three tests (substeps SS2.1, SS2.2 and SS2.3) to reject most of the false alarms:

  · Substep SS2.1 (Fixed TIR thresholding to reject clouds): Since clouds have a low temperature, a rather low TIR threshold $g_{thresh}^{TIR}$, corresponding to a temperature of, for instance 250° K, may be sufficient for this purpose, which is mandatory for hot target detection based on satellite data and optionally for airborne data.
  · Substep SS2.2 (False alarm rejection using a MIR/VNIR-channel radiance ratio threshold): The proposed MIR/VNIR ratio threshold value $thresh_{MIR/VNIR}$ = 0.01 - 0.02 should be adapted, depending on the real scene conditions and the spectral response of the used VNIR-channel.
  · Substep SS2.3 (Adaptive TIR thresholding): The adaptive TIR thresholding allows to select among the MIR bright spots only those pixels, which have the TIR radiance value higher than for the background. A rather small TIR threshold $\Delta g^{TIR}$, corresponding to $\sim$1° K above the median value, can be recommended to be used for this purpose in order not to limit additionally detectability of small hot targets.

- Optional Step OS3 (Application of the bi-spectral technique with target area check and target temperature thresholding):

- Optional Substep OSS3.0 (Atmospheric correction): There is performed an atmospheric correction of the at-sensor MIR and TIR channel radiances of the scene pixels remaining as bright spots after the Steps S1 and S2 in the flow chart (FIGURE) so far. It is an interactive procedure, requires a measurement or assumption of the atmospheric parameters and is not a part of this invention.
- Optional Substep OSS3.1 (Bi-spectral technique): The bi-spectral technique can be applied to the calibrated and atmospherically corrected MIR and TIR sensor channel signals of the bright spots which remain after the Steps S1 and S2 in the flow chart (FIGURE) so far. It is not a part of this invention. The apparent target temperature $T_{HOT\ TARGET}$ and relative area $q_{HOT\ TARGET}$ are retrieved as a result.
- Optional Substep OSS3.2 (Relative Target area check): Only the targets with the relative area $q_{HOT\ TARGET}$ of not less than 0 and not greater than 1 are retained. The other targets are considered as false alarms and are rejected.
- Optional Substep OSS3.3 (Target temperature thresholding): Only the targets with temperature in a preselected temperature range (for instance, from 500° to 1500° K) are retained. The other targets are considered as false alarms and are rejected.

**Claims**

1. A method for adaptive and combined thresholding for daytime aerocosmic remote detection of hot targets on the earth surface based on the utilisation of system corrected multispectral optoelectronic sensor system data characterized by the application of the following steps to digital image data potentially containing hot targets covering a relative pixel ie an image element area from several pixels down to $10^{-4}$ of one pixel ie a sub-pixel domain:

   a) detection of the bright spots by an adaptive Mid-Infrared (MIR) thresholding, rejecting the fire-free pixels with the MIR radiance below the threshold in accordance with a moving window algorithm for the bright spot detection in the MIR channel image data, by calculating for each moving window box of the MIR images the median $g_{med}^{MIR}$ and the deviation

$$d^{MIR} = \frac{1}{N} \sum_{i=1}^{N} \left| g_i^{MIR} - g_{med}^{MIR} \right|, \qquad (M1)$$

   where $N$ is the number of pixels in the box, $g_i^{MIR}$ are their radiance signals, and a pixel is identified as a bright spot, if

$$g_i^{MIR} > g_{med}^{MIR} + \Delta g^{MIR}, \qquad (M2)$$

   where the threshold $\Delta g^{MIR}$ over the median $g_{med}^{MIR}$ is adapted and proportional to the deviation $d^{MIR}$:

$$\Delta g^{MIR} = \alpha^{MIR} \cdot d^{MIR}, \qquad (M3)$$

   with the parameter $\alpha^{MIR}$ to be chosen under the condition that later a combined MIR/VNIR radiance ratio threshold will be used for false alarm rejection, (Step S1);
   b) three successive processing procedures performed for each bright spot as obtained in the previous step S1 of the co-registered multispectral scene providing fixed as well as adaptive thresholding operations with its radiometric data in the Thermal Infrared (TIR) channel in combination with a threshold operation using a ratio of the radiometric data in the MIR channel to the radiometric data in a Visible/Near Infrared (VNIR) channel, (Step S2), these combined procedures consisting of the following substeps:

   bI) Substep SS2.1: A fixed thresholding in the TIR, requiring that the radiant temperature calculated from the system corrected sensor data (e.g. based on the at-sensor TIR radiances) for all bright spots, should exceed the radiance corresponding, for instance, to a temperature of 250° K to eliminate cloud pixels;
   b2) Substep SS2.2: An adaptive MIR/VNIR ratio threshold $thres_{MIR/VNIR}$ is applied to all remaining bright spots (with the typical threshold ratio value $thres_{MIR/VNIR}$ = 0,01 - 0,02), resulting in filtering out all bright spots with the MIR/VNIR channel radiance ratio less than $thres_{MIR/VNIR}$ as false alarms;

b3)Substep SS2.3: An adaptive TIR threshold is applied to all remaining bright spots in a moving window procedure by an adaptive TIR thresholding, rejecting fire-free false alarm pixels with the TIR radiance below the threshold by calculating for each moving window box of the TIR image the median $g_{med}^{TIR}$ and the deviation

$$d^{TIR} = \frac{1}{N} \sum_{i=1}^{N} \left| g_i^{TIR} - g_{med}^{TIR} \right|, \tag{T1}$$

where $N$ is the number of pixels in the box, $g_i^{TIR}$ are their radiance signals, and a pixel is identified as a bright spot, if

$$g_i^{TIR} > g_{med}^{TIR} + \Delta g^{TIR}, \tag{T2}$$

where the threshold $\Delta g^{TIR}$ over the median is chosen so as to avoid additional rejection of small hot targets.

2. A method as claimed in claim 1 comprising at least:

   a) a Mid Infrared (MIR) channel in the 3 - 5 μm spectral region,
   b) a Thermal Infrared (TIR) channel in the 8 - 13 μm spectral region, and
   c) a Visible/Near Infrared (VNIR) channel in the 0.4 - 1.0 μm region.

3. A method as claimed in claim 1, characterized by the following optional substeps for a possible additional subsequent false alarm rejection:

   a) Optional substep OSS3.0:
   Atmospheric correction of the at-sensor MIR and TIR channel radiances of the scene pixels remaining as bright spots after the steps S1 and S2, said correction constituting an interactive procedure requiring a measurement or assumption of the atmospheric parameters;
   b) Optional substep OSS3.1:
   Application of the bi-spectral technique to the scene pixels remaining as bright spots after the steps S1 and S2 using atmospherically corrected MIR- and TIR-channel data of the multispectral optoelectronic sensor, resulting in the retrieval of the apparent target temperature and of the apparent relative target area of these hot targets;
   c) Optional substep OSS3.2:
   Range check of the apparent relative target area $q_{HOT\ TARGET}$ to be within the physically reasonable range of $0 \leq q_{HOT\ TARGET} \leq 1$; otherwise the bright spot is rejected as a false alarm;
   d) Optional substep OSS3.3:
   Range check of the apparent target temperature within pre-selected "low" and "high" temperature boundaries $T_{low}$ and $T_{high}$ for the hot target radiance temperature $T_{HOT\ TARGET}$, i.e. $T_{low} \leq T_{HOT\ TARGET} \leq T_{high}$, resulting in the rejection of the bright spot as a false alarm if its apparent radiance temperature will be out of the pre-selected boundaries,

   the optional target area check and apparent target temperature thresholding according to the optional substeps OSS3.2 and OSS3.3 allowing to decrease the value of $\alpha^{MIR}$.

4. A method as claimed in any preceding claim characterized in that the system corrected multispectral optoelectronic sensor system data are derived from the sensor raw data applying radiometric calibration data files obtained during the laboratory on-ground calibration of the sensor channels and updated during in-flight radiometric checks of the sensor channels.

**Patentansprüche**

1. Verfahren zur adaptiven und kombinierten Schwellenwertbildung für eine aerokosmische Ferndetektion von heißen Zielobjekten auf der Erdoberfläche während des Tages, beruhend auf der Benutzung systemkorrigierter Daten eines multispektralen optoelektronischen Sensorsystems, **gekennzeichnet** durch die Anwendung der folgenden Schritte auf digitale Bilddaten, die potentiell heiße Zielobjekte enthalten, die eine relative Pixel-, d.h. Bildelementfläche von einigen Pixels bis auf 10-4 eines Pixels, d.h. in den Subpixelbereich hinab, bedecken:

   a) Detektion der hellen Stellen durch eine adaptive Schwellenwertbildung im mittleren Infrarot (MIR), wobei die feuerfreien Pixel mit der spezifischen MIR-Strahlung unterhalb des Schwellenwertes gemäß einem Wanderfenster-Algorithmus für die Detektion von hellen Stellen bei den MIR-Kanal-Bilddaten durch Berechnung des Medians $g_{med}^{MIR}$ und der Abweichung

$$d^{MIR} \;=\; \frac{1}{N} \sum_{i=1}^{N} \left| g_i^{MIR} - g_{med}^{MIR} \right| \qquad\qquad (M1)$$

für jede Wanderfenster-Box der MIR-Bilder zurückgewiesen werden, wobei $N$ die Anzahl der Pixel in der Box ist, $g_i^{MIR}$ ihre Strahlungssignale sind, und ein Pixel als eine helle Stelle identifiziert wird, wenn

$$g_i^{MIR} > g_{med}^{MIR} + \Delta g^{MIR} \;, \qquad\qquad (M2)$$

wobei der Schwellenwert $\Delta g^{MIR}$ über den Median $g_{med}^{MIR}$ der Abweichung $d^{MIR}$ angepaßt und zu dieser proportional ist:

$$\Delta g^{MIR} = \alpha^{MIR} \cdot d^{MIR}, \qquad\qquad (M3)$$

mit dem unter der Bedingung gewählten Parameter $\alpha^{MIR}$, daß später ein kombinierter MIR/VNIR-Strahlungsverhältnis-Schwellenwert für eine Falschalarmzurückweisung verwendet wird (Schritt 1);

   b) drei aufeinanderfolgende Verarbeitungsprozeduren, die für jede helle Stelle, wie sie im vorhergehenden Schritt S1 der koregistrierten multispektralen Szene erhalten wird, ausgeführt werden, wobei sowohl feste als auch adaptive Schwellenwertbildungsoperationen mit ihren radiometrischen Daten im Kanal des thermischen Infrarots (TIR) in Kombination mit einer Schwellenwertoperation unter Benutzung eines Verhältnisses der radiometrischen Daten im MIR-Kanal zu den radiometrischen Daten in einem Kanal des Sichtbaren/Nahen Infrarot (VNIR) vorgesehen sind (Schritt S2), wobei diese kombinierten Prozeduren aus den folgenden Unterschritten bestehen:

   b1) Unterschritt SS2.1: Eine feste Schwellenwertbildung im TIR, wobei verlangt wird, daß die aus den systemkorrigierten Sensordaten (die z.B. auf den TIR-Strahlungen an einem lufttransportierten Sensor beruhen) für alle hellen Stellen berechnete Strahlungstemperatur die Strahlung entsprechend beispielsweise einer Temperatur von 250°K übersteigen sollte, um Wolkenpixel auszuschalten;

   b2) Unterschritt SS2.2: Ein adaptiver MIR/VNIR-Verhältnis-Schwellenwert $thres_{MIR/VNIR}$ wird allen verbleibenden hellen Stellen (mit dem typischen Schwellenwertverhältniswert $thres_{MIR/VNIR}$ = 0,01 - 0,02) zugeführt, was dazu führt, daß alle hellen Stellen mit einem MIR/VNIR-Kanal-Strahlungsverhältnis, das kleiner als $thres_{MIR/VNIR}$ ist, als Falschalarme ausgefiltert werden;

   b3) Unterschritt SS2.3: Ein adaptiver TIR-Schwellenwert wird allen verbleibenden hellen Stellen in einer Wanderfensterprozedur durch eine adaptive TIR-Schwellenwertbildung zugeführt, wobei feuerfreie Falschalarm-Pixel mit der TIR-Strahlung unterhalb dem Schwellenwert durch Berechnung des Medians $g_{med}^{TIR}$ und der Abweichung

$$d^{TIR} \;=\; \frac{1}{N} \sum_{i=1}^{N} \left| g_i^{TIR} \;-\; g_{med}^{TIR} \right| \qquad\qquad\qquad (T1)$$

für jede Wanderfenster-Box des TIR-Bildes zurückgewiesen werden,

wobei $N$ die Anzahl der Pixel in der Box ist, $g_i^{TIR}$ ihre Strahlungssignale sind, und ein Pixel als eine helle Stelle identifiziert wird, wenn

$$g_i^{TIR} > g_{med}^{TIR} + \Delta g^{TIR}, \qquad\qquad\qquad (T2)$$

wobei der Schwellenwert $\Delta g^{TIR}$ über den Median so gewählt ist, daß eine zusätzliche Zurückweisung kleiner heißer Zielobjekte vermieden wird.

2. Verfahren nach Anspruch 1, umfassend wenigstens:

    a) einen Kanal im mittleren Infrarot (MIR) im 3 - 5 µm-Spektralbereich,
    b) einen Kanal im thermischen Infrarot (TIR) im 8 - 13 µm-Spektralbereich, und
    c) einen Kanal im Sichtbaren/nahen Infrarot (VNIR) im 0,4 - 1,0 µm-Bereich.

3. Verfahren nach Anspruch 1, **gekennzeichnet** durch die folgenden optionalen Unterschritte für eine mögliche zusätzliche nachfolgende Falschalarmzurückweisung:

    a) Optionaler Unterschritt OSS3.0:
    Atmosphärenkorrektur der am lufttransportierten Sensor auftretenden MIR- und TIR-Kanal-Strahlungen der Szenenpixel, die als helle Stellen nach den Schritten S1 und S2 verblieben, wobei diese Korrektur eine interaktive Korrektur bildet, die eine Messung oder Annahme der Atmosphärenparameter erfordert;
    b) Optionaler Unterschritt OSS3.1:
    Anwendung der Bispektraltechnik auf die Szenenpixel, die als helle Stellen nach den Schritten SI und S2 verbleiben, wobei atmosphärenkorrigierte MIR- und TIR-Kanaldaten des multispektralen optoelektronischen Sensors benutzt werden, was zum Auffinden der scheinbaren Zielobjekttemperatur und der scheinbaren relativen Zielobjektfläche dieser heißen Zielobjekte führt;
    c) Optionaler Unterschritt OSS3.2:
    Bereichsüberprüfung der scheinbaren relativen Zielobjektfläche $q_{HOT\ TARGET}$, die innerhalb des physikalisch sinnvollen Bereichs von $0 \le q_{HOT\ TARGET} \le 1$ liegen soll; sonst wird die helle Stelle als ein Falschalarm zurückgewiesen;
    d) Optionaler Unterschritt OSS3.3:
    Bereichsüberprüfung der scheinbaren Zielobjekttemperatur innerhalb vorgewählten "Niedrig"- und "Hoch"-Temperatur-Grenzen $T_{low}$ und $T_{high}$ für die hohe Zielobjektstrahlungstemperatur $T_{HOT\ TARGET}$, d.h. $T_{low} \le q_{HOT\ TARGET} \le T_{high}$, was zur Zurückweisung der hellen Stelle als ein Falschalarm führt, wenn ihre scheinbare Strahlungstemperatur außerhalb der vorgewählten Grenzen liegt,

wobei die optionale Zielobjektflächenüberprüfung und die Schwellenwertbildung bei der scheinbaren Zielobjekttemperatur gemäß den optionalen Unterschritten OSS3.2 und =SS3.3 eine Verringerung des Wertes von $\alpha^{MIR}$ ermöglicht.

4. Verfahren nach einem der vorhergehenden Ansprüche, **dadurch gekennzeichnet**, daß die systemkorrigierten Daten des multispektralen optoelektronischen Sensorsystems von den Sensorrohdaten unter Anwendung radiometrischer Kalibrierungsdatendateien abgeleitet werden, die während der Laborkalibrierung der Sensorkanäle am Boden erhalten und während radiometrischer Überprüfungen der Sensorkanäle beim Flug aktualisiert werden.

**Revendications**

1. Procédé d'établissement adaptatif et combiné d'un seuil pour une détection aérocosmique diurne à distance de cibles chaudes sur la surface terrestre, sur la base de l'utilisation de données d'un système de capteurs opto-électroniques multispectraux, corrigées du système, caractérisé par l'application des étapes suivantes à des données d'image numériques contenant potentiellement des cibles chaudes couvrant une surface relative de pixels, c'est-à-dire d'éléments d'image, allant de plusieurs pixels pour tomber à $10^{-4}$ d'un pixel, c'est-à-dire d'un domaine inférieur à un pixel :

   a) détection des points brillants au moyen de l'établissement adaptatif d'un seuil pour l'infrarouge moyen (MIR), rejet des pixels sans feu avec une radiance MIR inférieure au seuil conformément à un algorithme à fenêtre mobile pour la détection de spots brillants dans les données d'image du canal MIR, par calcul, pour chaque cadre de fenêtre mobile des images MIR, de la médiane $G^{MIR}_{med}$ et l'écart

$$d^{MIR} = \frac{1}{N} \sum_{l=1}^{N} \left| g^{MIR}_i - g^{MIR}_{med} \right|, \qquad (M1)$$

   N étant le nombre de pixels dans le cadre, $g^{MIR}_i$ étant leurs signaux de radiance et un pixel étant identifié comme un spot brillant si

$$g^{MIR}_i > g^{MIR}_{med} + \Delta g^{MIR}, \qquad (M2)$$

   le seuil $\Delta g^{MIR}$ au-dessus de la médiane $g^{MIR}_{med}$ étant adapté et proportionnel à l'écart $d^{MIR}$ :

$$\Delta g^{MIR} = \alpha^{MIR} \cdot d^{MIR}, \qquad (M3)$$

   le paramètre $\alpha^{MIR}$ devant être choisi dans les conditions dans lesquelles ultérieurement un seuil du rapport de radiance MIR/VNIR combiné est utilisé pour un rejet de fausses alarmes (étape S1) ;
   b) trois procédures successives de traitement exécutées pour chaque point brillant tel qu'il est obtenu lors de l'étape précédente S1 de la scène multispectrale enregistrée, et prévoyant des opérations d'établissement d'un seuil fixe et d'établissement d'un seuil adaptatif avec leurs données radiométriques dans le canal de l'infrarouge thermique (TIR) en combinaison avec une opération d'établissement de seuil moyennant l'utilisation d'un rapport des données radiométriques dans le canal MIR aux données radiométriques dans un canal du rayonnement visible/du proche infrarouge (VNIR) (étape S2), ces procédures combinées comprenant les sous-étapes suivantes :

   b1) Sous-étape SS2.1 : un établissement de seuil fixe dans le canal TIR est exécuté, ce qui requiert que la température de rayonnement calculée à partir des données du capteur corrigées du système (par exemple sur la base des radiances TIR au niveau du capteur) pour tous les spots brillants dépasse la radiance correspondant par exemple à une température de 250°K pour la suppression de pixels de nuages ;
   b2) Sous-étape SS2.2 : un seuil adaptatif du rapport MIR/VNIR $thres_{MIR/VNIR}$ est appliqué à tous les autres spots brillants (avec la valeur typique du rapport de seuil $thres_{MIR/VNIR} = 0,01 - 0,02$), ce qui conduit à l'élimination par filtrage de tous les spots brillants avec le rapport de radiances des canaux MIR/VNIR inférieur à $thres_{MIR/VNIR}$ en tant que fausses alarmes ;
   b3) Sous-étape SS2.3 : un seuil TIR adaptatif est appliqué à l'ensemble des autres spots brillants dans une procédure à fenêtre mobile par établissement d'un seuil adaptatif TIR, rejet de pixels de fausses alarmes avec un rayonnement TIR inférieur au seuil par calcul, pour chaque cadre de fenêtre mobile de l'image TIR, de la médiane $g^{TIR}_{med}$ et de l'écart

$$d^{TIR} = \frac{1}{N} \sum_{l=1}^{N} \left| g^{TIR}_{i} - g^{TIR}_{med} \right|, \qquad (T1)$$

N étant le nombre de pixels dans le cadre, $g^{TIR}_{i}$ étant leurs signaux de radiance et un pixel étant identifié comme un spot brillant si

$$g^{TIR}_{i} > g^{TIR}_{med} + \Delta g^{TIR}, \qquad (T2)$$

le seuil $\Delta g^{TIR}$ au-dessus de la médiane étant choisi de manière à éviter un rejet additionnel de petites cibles chaudes.

**2.** Procédé selon la revendication 1, comprenant :

a) un canal pour l'infrarouge moyen (MIR) dans la plage spectrale de 3-5 µm ;
b) un canal de l'infrarouge thermique (TIR) dans la plage spectrale de 8-13 µm ; et
c) un canal de la plage visible/du proche infrarouge (VNIR) dans la plage 0,4-1,0 µm.

**3.** Procédé selon la revendication 1, caractérisé par les sous-étapes optionnelles suivantes pour un éventuel rejet additionnel ultérieur de fausses alarmes :

a) Sous-étape optionnelle OSS3.0 :
Une correction atmosphérique des radiances, dans les canaux MIR et TIR au niveau du capteur, des pixels de la scène qui subsistent en tant que points brillants après les étapes S1 et S2, ladite correction consistant en une procédure interactive requérant une mesure ou une hypothèse concernant les paramètres atmosphériques ;
b) Sous-étape optionnelle OSS3.1 :
Application de la technique bi-spectrale aux pixels de la scène qui subsistent en tant que points brillants après les étapes S1 et S2 en utilisant des données de canaux MIR et TIR, corrigées du point de vue atmosphérique, du capteur opto-électronique multispectral, ce qui conduit à la récupération de la température apparente et de la surface relative apparente de ces cibles chaudes ;
c) Sous-étape optionnelle OSS3.2 :
Vérification du fait que la gamme de la zone de cible relative apparente $q_{CIBLE\ CHAUDE}$ doit être située dans la gamme raisonnable du point de vue physique $0 \leq q_{CIBLE\ CHAUDE} \leq 1$ ; sinon le point lumineux est rejeté en tant que fausse alarme ;
d) Sous-étape optionnelle OSS3.3 :
Vérification du fait que la gamme de la température apparente des cibles se situe entre des limites "faible" et "élevée" sélectionnées $T_{faible}$ et $T_{élevée}$ pour la température de rayonnement de cible chaude $T_{CIBLE\ CHAUDE}$, c'est-à-dire $T_{faible} \leq T_{CIBLE\ CHAUDE} \leq T_{élevée}$, ce qui conduit au rejet du spot brillant en tant que fausse alarme si sa température apparente de rayonnement se situe en dehors des limites présélectionnées,

le contrôle optionnel de la surface des cibles et la fixation du seuil de température apparente de cible conformément aux sous-étapes optionnelles OSS3.2 et OSS3.3 permettant de réduire la valeur de $\alpha^{MIR}$.

**4.** Procédé selon l'une quelconque des revendications précédentes, caractérisé en ce que les données du système de capteurs opto-électroniques multispectraux, corrigées du système, sont dérivées des données brutes des capteurs par application de fichiers de données d'étalonnage radiométrique, obtenus pendant l'étalonnage en laboratoire au sol des canaux du capteur et mis à jour lors de contrôles radiométriques en vol des canaux du capteur.

System corrected co-registered VNIR, MIR and TIR images

SO | GEOGRAPHICAL SCREENING

↓ Selected image areas    ↓ $\alpha^{MIR}$

S1 | ADAPTIVE BRIGHT SPOT DETECTION BASED ON THE MIR-CHANNEL DATA

Bright spots (image elements with potential hot targets)

*COMBINED THRESHOLDING*    ↓ $g^{TIR}_{thresh}$
*TIR-, MIR-, VNIR CHANNEL DATA*

S2

SS2.1 | FIXED TIR THRESHOLDING TO REJECT CLOUDS

↓ $Thresh^{MIR/VNIR}$

SS2.2 | FALSE ALARM REJECTION USING A MIR/VNIR RADIANCE THRESHOLD

↓ $\Delta g^{TIR}$

SS2.3 | ADAPTIVE TIR THRESHOLDING

Hot targets (MIR and TIR radiances at sensor entrance)

*OPTIONAL*

OS3

OSS3.0 | ATMOSPHERIC CORRECTION

↓ (MIR and TIR radiances at surface)

OSS3.1 | BI-SPECTRAL TECHNIQUE

↓ $(T_{HOT\ TARGET}, q_{HOT\ TARGET})$

OSS3.2 | RELATIVE TARGET AREA-CHECK

$T_{LOW}$ ↓    $T_{HIGH}$ ↓

OSS3.3 | TARGET TEMPERATURE THRESHOLDING

↓ Hot target parameters: apparent target temperature and relative target area